# NEUE EUROPÄISCHE PATENTSCHRIFT

(11) **EP 3 508 373 B2**
(45) Veröffentlichungstag und Bekanntmachung des Hinweises auf die Entscheidung über den Einspruch: **22.04.2026**
(45) Hinweis auf die Patenterteilung: 13.01.2021
(21) Anmeldenummer: 19157012.6
(22) Anmeldetag: 08.11.2017
(51) Int. Cl.: B60N 2/24

(54) **GURTGESTELL FÜR EINEN FAHRZEUGSITZ**
BELT FRAME FOR A VEHICLE SEAT
SUPPORT DE CEINTURE POUR UN SIÈGE DE VÉHICULE

(30) Priorität: 11.11.2016 DE 102016121619; 03.05.2017 DE 102017109467
(43) Veröffentlichungstag der Anmeldung: 10.07.2019
(62) Teilanmeldung aus: 17200521.7
(73) Patentinhaber: Aguti Produktentwicklung & Design GmbH, 88085 Langenargen (DE)
(72) Erfinder: Grieger, Andreas, 88079 Kressbronn (DE)
(74) Vertreter: RavensPAT Patentanwälte Partnerschaft mbB

(56) Entgegenhaltungen:
- DE-A1- 102014 003 966
- DE-A1- 3 813 557
- DE-T2- 60 302 129
- JP-A- 2005 186 726
- US-A- 3 885 810
- US-A1- 2012 274 115
- US-B1- 6 209 943

## Beschreibung

### Stand der Technik

Vorrichtungen zur Anbringung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes im Verkehrsmittel.

In Verkehrsmitteln, wie Fahrzeugen, beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Die kostengünstige und wirtschaftlich vorteilhafte Ausbildung bzw. Herstellung der Vorrichtung stellt dabei eine besondere Herausforderung dar. Die DE 603 02 129 T2 offenbart - ein Gurtgestell für einen Fahrzeugsitz oder eine Fahrzeugsitzbank, wobei am Gurtgestell Anbringmittel zur Anbringung an eine Fahrzeugstruktur eines Fahrzeugs im Bereich eines Fahrzeugbodens vorhanden sind, wobei das Gurtgestell ein Rückhalteorgan umfasst, wobei das Rückhalteorgan am Gurtgestell in einem vertikalen Abstand zu den Anbringmittel zur Anbringung des Gurtgestells an die Fahrzeugstruktur des Fahrzeugs angeordnet ist und das Rückhalteorgan dazu ausgebildet ist, an einem Haltepunkt der Fahrzeugstruktur des Fahrzeugs angeordnet zu werden, wobei im angeordneten Zustand des Gurtgestells am Fahrzeug der Haltepunkt in einem Bereich hinter einer Rückseite des Gurtgestells bezogen auf eine Fahrtrichtung vorhanden ist.

### Aufgabe und Vorteile der Erfindung

Aufgabe der vorliegenden Erfindung ist es, eine Vorrichtung der einleitend beschriebenen Art bzw. eine Personensitzanordnung für ein Fahrzeug technisch und wirtschaftlich vorteilhaft bereitzustellen. Insbesondere sollen Stabilitätskriterien sicher und herstellungstechnisch vorteilhaft erfüllbar sein.

Diese Aufgabe wird durch die unabhängigen Ansprüche gelöst.

In den abhängigen Ansprüchen werden vorteilhafte und zweckmäßige Weiterbildungen der Erfindung genannt.

Die Erfindung geht von einem Gurtgestell für einen Fahrzeugsitz oder eine Fahrzeugsitzbank aus, dass am Gurtgestell Anbringmittel zur Anbringung an eine Fahrzeugstruktur eines Fahrzeugs im Bereich eines Fahrzeugbodens vorhanden sind.

Ein solches Gurtgestell ist insbesondere als Einbauvorrichtung in der Art eines rahmenartigen Gestells ausgebildet, umfassend Freilassungen, die von parallel und winklig zueinander ausgerichteten, miteinander verbundenen, insbesondere länglichen Profilen umrahmt sind. Die Profile bestehen vorzugsweise aus einem metallischen Material.

Das Gurtgestell ist vorzugsweise derart ausgelegt und ausgebildet, in dem Fahrzeug beziehungsweise in einem Kraftfahrzeug an einem Bodenabschnitt des Fahrzeugs befestigt zu werden. Bevorzugterweise sind die Anbringmittel dazu ausgebildet das Gurtgestell lösbar oder unlösbar fixierbar an der Fahrzeugsstruktur, z. B. einem Fahrzeugrahmen, anzubringen. Z.B. ist das Gurtgestell durch die Anbringmittel an die Fahrzeugstruktur anschraubbar und/oder anschweißbar.

Das Fahrzeug ist z.B. als ein Automobil, als ein Autobus, als ein Wohnmobil oder auch als ein Camping-Mobil ausgebildet. Das Gurtgestell bildet vorteilhafterweise eine Grundstruktur für eine Sitzanordnung im Fahrzeug, beziehungsweise für eine Fahrzeugsitzanordnung.

Ein Personen-Rückhaltesystem ist vorteilhafterweise als eine Sicherheitsgurtanordnung, z.B. als ein Mehrpunktgurt-Sicherheitssystem oder als Dreipunktgurt-Sicherheitssystem ausgebildet. Am Gurtgestell ist vorzugsweise eine Komponente des Personen-Rückhaltesystems anbringbar. Eine derartige Komponente ist z.B. als ein Gurtaufroller, eine Gurtumlenkanordnung zur Richtungsänderung des daran vorbeigeführten Gurts, eine Fixierung eines Gurtendes oder als ein Gurtschloss, an dem ein Einsteckteil lösbar einrastbar ist, mit welchem der Gurt als Schlaufe ausziehbar ist, vorhanden. Bevorzugterweise ist ein Anbindungselement zur Anordnung der Komponente des Personen-Rückhaltesystems am Gurtgestell vorgesehen.

Das vorgeschlagene Gurtgestell muss konstruktiv bzw. mechanisch so ausgelegt sein, um einer maximal tolerierbare bzw. mögliche Belastungen, insbesondere bei dynamischen Belastungsvorgängen, einen ausreichenden Widerstand entgegensetzen zu können, also entsprechende Kräfte und Momente aufzunehmen und weitergeben zu können.

Dies ist Voraussetzung zur Erhaltung der Sicherheit einer Person, welche mit einer Sicherheitsgurtanordnung sicherbar ist, wobei die Sicherheitsgurtanordnung an dem im Fahrzeug fixierten Gurtgestell aufgenommen ist, samt Elementen eines entsprechenden Personensitzes. Das Gurtgestell ist demgemäß vorzugsweise so ausgestaltet, eine innere Gerüststruktur eines fest im Fahrzeug installierten Personensitzes zu bilden.

Für eine vergleichsweise höhere Stabilität des Gurtgestells, z.B. für eine erweiterte Einsatzmöglichkeit auf einen Personensitz mit zwei oder mehr Sitzplätzen, kann das Gurtgestell zum Beispiel genau zwei parallele, z.B. voneinander beabstandete Vertikalstützen umfassen, wobei die Vertikalstützen vorzugsweise identisch aufgebaut sind. Beide Vertikalstützen sind bevorzugt mit einer horizontal angeordneten Querstrebe verbunden. Das Gurtgestell kann ggf. auch zwei oder mehr vorzugsweise gleichartige Querstreben aufweisen, wobei eine Querstrebe mit einer Vertikalstütze oder mit mehreren Vertikalstützen verbunden ist.

Die Vertikalstützen sind vorteilhafterweise voneinander lateral bzw. seitlich bzw. horizontal beabstandet vorhanden. Gegebenenfalls kann im Fußbereich der Vertikalstützen eine Verbindung der Vertikalstützen miteinander vorhanden sein, z.B. durch eine Querstrebe, über welche eine Fixierung am Bodenbereich des Fahrzeugs an der Fahrzeugstruktur einrichtbar ist. Die Anbringmittel des Gurtgestells zur Anbringung an eine Fahrzeugstruktur eines Fahrzeugs im Bereich eines Fahrzeugbodens sind am Fußbereich des Gurtgestells ausgebildet.

Eine Querstrebe ist vorzugsweise durchgehend ausgebildet und steht bevorzugterweise an der einen oder den mehreren Vertikalstützen horizontal bzw. seitlich über, beispielsweise beidseitig oder einseitig. Demgemäß ist die Querstrebe in der Regel länger als ein Aufstellmaß bzw. ein insbesondere lateraler Abstand von insbesondere zwei Vertikalstützen.

Bei einem typischem erfindungsgemäßem Gurtgestell mit zwei senkrecht im Fahrzeug aufstellbaren Vertikalstützen und einer horizontal gerichteten Querstrebe beträgt die Länge der Vertikalstützen bzw. die Höhe des Gurtgestells im montierten Zustand etwa 1,1 Meter bis ca. 1,3 Meter, wobei die Vertikalstützen über einen Abstand von z.B. ca. 0,3 bis 0,4 Meter voneinander seitlich beabstandet vorhanden sind. Eine Länge der Querstrebe liegt bevorzugterweise bei ca. 0,7 bis 0,9 Meter.

Die Vertikalstütze und/oder die Querstrebe ist vorteilhafterweise als ein Hohlprofil ausgebildet. Im Querschnitt ist das Hohlprofil typischerweise rechteckig oder quadratisch vorhanden, denkbar ist aber auch, dass das Hohlprofil im Querschnitt rund oder elliptisch ausgebildet ist. Ein typisches Längen- und/oder Breitenmaß bzw. Seitenmaß des Querschnitts des Hohlprofils beträgt ca. 30 bis 40 Millimeter. Eine Wanddicke des Hohlprofils liegt in der Regel in einem einstelligen Millimeterbereich. Denkbar ist auch, dass das Hohlprofil als ein Mehrfachhohlprofil vorhanden ist.

Des Weiteren ist es vorstellbar, dass das Hohlprofil, insbesondere die Vertikalstütze, eine Materialausnehmung z.B. eine Schlitzung aufweist, welche als Soll-Biegestelle im Belastungsfall des angeordneten Gurtgestells, z.B. in einem Crashfall des Fahrzeugs ausgebildet ist. Damit ist ein plastisches Verformungsverhalten der Vertikalstütze in einem Belastungsfall beeinflussbar, insbesondere vorgebbar. Vorteilhafterweise erstreckt sich die Ausnehmung an der Vertikalstützte insbesondere in horizontaler Richtung über eine Vorderseite der Vertikalstütze und über zumindest einen an die Vorderseite anschließenden seitlichen Bereich der Vertikalstütze. Insbesondere erstreckt sich die Materialausnehmung abschnittsweise auf der Vorderseite und auf zwei seitlich an die Vorderseite anschließende sich gegenüberliegende seitliche Bereiche der Vertikalstütze. Die Vorderseite ist bezogen auf einen Anbringzustand des Gurtgestells im Fahrzeug zu verstehen.

Ein mit dem Gurtgestell bildbarer Fahrzeug- bzw. Personensitz weist demgemäß eine Sitzstruktur mit einer Sitzfläche auf, welche sich an der Vorderseite des Personensitzes und damit an der Vorderseite des Gurtgestells bzw. der Vertikalstütze befindet, wobei die Vorderseite vorteilhafterweise in Fahrtrichtung ausgerichtet ist.

Im eingebauten Zustand des Gurtgestells im Fahrzeug entspricht die relevante Belastungsrichtung in der Regel einer Sitzrichtung der gesicherten Person bzw. der Fahrtrichtung des Fahrzeugs. Bei einem Fahrzeug tritt eine maximale Belastung z.B. bei einem Aufprall des fahrenden Fahrzeugs gegen ein Hindernis auf. Aufgrund der abgebremsten Masse der im Fahrzeug sitzenden und gesicherten Person wird über die Sicherheitsgurte des Personenrückhaltesystems eine ruckartig wirkende Zugkraft bzw. ein daraus resultierendes Moment in der Belastungsrichtung bzw. in Fahrtrichtung am Gurtgestell wirksam.

Ein wesentlicher Aspekt der Erfindung ist nun darin zu sehen, dass das Gurtgestell ein Rückhalteorgan umfasst, wobei das Rückhalteorgan am Gurtgestell in einem vertikalen Abstand zu den Anbringmittel zur Anbringung des Gurtgestells an die Fahrzeugstruktur des Fahrzeugs angeordnet ist,
und wobei das Rückhalteorgan dazu ausgebildet ist, an einem Haltepunkt der Fahrzeugstruktur des Fahrzeugs angeordnet zu werden, wobei im angeordneten Zustand des Gurtgestells am Fahrzeug der Haltepunkt in einem Bereich hinter einer Rückseite des Gurtgestells bezogen auf eine Fahrtrichtung, insbesondere einer Sitzrichtung, vorhanden ist.

Hierdurch kann das Gurtgestell bei vergleichbarer Stabilität mit einer geringeren Abmessung der Vertikalstütze bzw. der Querstrebe und damit mit einem geringeren Materialeinsatz bzw. mit einem geringeren Gewicht bereitgestellt werden, oder hierdurch ist die Stabilität des Gurtgestells bei gleichen Abmessungen im Belastungsfall verbessert.

Vorteilhafterweise ist der Haltepunkt in Richtung Fahrzeughimmel versetzt zum Fahrzeugboden am Fahrzeug vorhanden. Denkbar ist allerdings auch, dass der Fahrzeugboden den Haltepunkt aufweist.

Vorteilhaft ist auch, dass das Rückhalteorgan als flaches Element vorhanden ist. Das Rückhalteorgan ist z.B. als ein insbesondere schmales Rückhalteband ausgebildet. Beispielsweise ist das Rückhalteorgan als ein Metallband und/oder ein Gurtband vorhanden. Z.B. ist das Rückhalteorgan als ein Flacheisen ausgebildet.

Das Rückhalteorgan weist entlang seines Verlaufs vom Gurtgestell zum Haltepunkt der Fahrzeugstruktur eine Biegung auf.

Hierdurch ist das Rückhalteorgan derart am Gurtgestellt, bzw. am Fahrzeugsitz und am Fahrzeug anordenbar, sodass es für einen Nutzer nicht sichtbar montierbar ist. Insbesondere ist es hierdurch möglich die Funktion des Rückhalteorgans am Gurtgestell zu realisieren, ohne dass ein Einbau weiterer Fahrzeugmöbel behindert ist.

Vorteilhafterweise ist im angeordneten Zustand des Gurtgestells am Fahrzeug ein insbesondere direkter, z.B. kürzester Abstand zwischen einem Montagepunkt des Rückhalteorgans am Gurtgestell und dem Haltepunkt kleiner, als eine Länge des Rückhalteorgans, wobei die Länge des Rückhalteorgans vom Montageorgan zum Haltepunkt entlang eines Verlaufs des Rückhalteorgans zu sehen ist. Bevorzugterweise ist das Rückhalteorgan L-förmig ausgebildet bzw. im angeordneten Zustand am Gurtgestell und am Fahrzeug L-förmig vorhanden.

Außerdem vorteilhaft ist, dass das Rückhalteorgan entlang seines Verlaufs vom Gurtgestell zum Haltepunkt der Fahrzeugstruktur verformbar vorhanden ist. Hierdurch ist eine Form des Rückhalteorgans vergleichsweise einfach an Konturen bzw. Konturverläufe von weiteren Fahrzeugmöbel bzw. des Fahrzeugs anpassbar.

Auch ist es von Vorteil, dass das Rückhalteorgan mehrere Biegungen aufweist. Hierdurch kann das Rückhalteorgan derart vorhanden sein, dass es im angeordneten Zustand anliegend an eine Außenseite eines Fahrzeugsitzes und/oder einer Innenseite des Fahrzeugs, insbesondere einer inneren Fläche einer Fahrzeugwand vorhanden ist. Vorteilhafterweise ist das Rückhalteorgan in einer Weise ausgebildet, dass es im angeordneten Zustand einer Ausbildung einer Außenkontur des Fahrzeugsitzes und/oder einer Außenkontur des Fahrzeugs, z.B. eines Fahrzeugmöbels folgt.

Erfindungsgemäß weist das Rückhalteorgan in einem Grundzustand entlang seines Verlaufs vom Gurtgestell zum Haltepunkt der Fahrzeugstruktur eine Biegung auf und das Rückhalteorgan ist in einem Belastungsfall, z.B. im Crashfall, derart verformbar, dass die Biegung verändert ist. Das Rückhalteorgan ist derart ausgebildet, dass es im Belastungsfall plastisch verformbar vorhanden ist. Hierdurch kann das Rückhalteorgan im Belastungsfall auf das Gurtgestell einwirkende Kräfte aufnehmen bzw. absorbieren und ggf. an über den Haltepunkt an die Fahrzeugstruktur weiterleiten. Beispielsweise ist das Rückhalteorgan im Belastungsfall von seiner gebogenen Form in eine gerade Form streckbar vorhanden. Vorteilhafterweise streckt sich das Rückhalteorgan von einem Grundzustand im Belastungsfall in einen Haltezustand.

Überdies ist es von Vorteil, dass zwei oder mehr Rückhalteorgane vorhanden sind. Hierdurch ist eine Stabilität des Gurtgestells vergleichsweise erhöht. Auch ist hierdurch ein Verformungsverhalten des Gurtgestells im Belastungsfall vergleichsweise verbessert vorgebbar.

Vorteilhafterweise sind die Rückhalteorgane insbesondere in vertikaler Richtung beabstandet zueinander am Gurtgestell vorhanden. Beispielsweise sind die Rückhalteorgane parallel zueinander ausgerichtet am Gurtgestell angeordnet. Vorstellbar ist weiterhin, dass die Rückhalteorgane identisch vorhanden sind. Denkbar ist aber auch, dass die Rückhalteorgane verschieden ausgebildet sind. Vorteilhafterweise unterscheiden sich die Rückhalteorgane in diesem Fall in ihrer Erstreckung von einem Montagepunkt am Gurtgestell zum Haltepunkt am Fahrzeug, z.B. in einer Form, insbesondere in einer Länge.

Erfindungsgemäss ist das Rückhalteorgan an einem Montagepunkt des Gurtgestells montiert. Denkbar ist weiterhin, dass der Montagepunkt in vertikaler Erstreckung des Gurtgestells gesehen, ausgehend von den Anbringmittel, in einem mittleren und/oder einem oberen Bereich des Gurtgestells vorhanden ist.

Vorteilhafterweise umfasst eine Querstrebe des Gurtgestells den Montagepunkt. Zwei Querstreben bilden vorteilhafterweise jeweils eine Oberseite und eine Unterseite des Rahmens des Gurtgestells, wobei zwei Vertikalstützen die Seiten des Rahmens bilden. Die Querstrebe, welche die Unterseite des Rahmens bildet umfasst vorteilhafterweise die Anbringmittel und ist damit am Fußbereich des Gurtgestells ausgebildet. Die gegenüberliegende zweite Querstrebe bildet damit die Oberseite bzw. den Kopfbereich des Gurtgestells. An der Oberseite, insbesondere an der Querstrebe ist vorteilhafterweise auch eine Komponente des Personen-Rückhaltesystem angeordnet. Vorstellbar ist weiterhin, dass eine weitere dritte Querstrebe vorhanden ist, welche im Bereich einer Sitzfläche eines Fahrzeugsitzes, welcher das Gurtgestell umfasst, vorhanden ist. Die dritte Querstrebe befindet sich somit in vertikaler Erstreckung gesehen in einem mittleren Bereich des Gurtgestells. Denkbar ist auch, dass die Vertikalstütze den Montagepunkt umfasst.

Ebenfalls vorteilhaft ist, dass der Montagepunkt des Gurtgestells in horizontaler Erstreckung des Gurtgestells und senkrecht zu der Fahrtrichtung gesehen, in einem mittleren und/oder einem äußeren Bereich des Gurtgestells vorhanden.

Vorteilhafterweise umfasst das Gurtgestell ein erstes Rückhalteorgan, wobei das erste Rückhalteorgan an einem ersten Montagepunkt am Kopfbereich des Gurtgestells montiert ist, wobei der erste Montagepunkt sich in horizontaler Erstreckung gesehen in einem mittleren Bereich des Gurtgestells, insbesondere in einem Bereich zwischen zwei Vertikalstützen vorhanden ist. Denkbar ist weiterhin, dass ein zweites Rückhalteorgan am Gurtgestell vorhanden ist, welches in vertikaler Richtung gesehen im Bereich einer Sitzfläche des Fahrzeugsitzes am Gurtgestell montiert ist. Denkbar ist weiterhin, dass das zweite Rückhalteorgan in horizontaler Richtung gesehen an einem äußeren Bereich des Gurtgestells, z.B. im Bereich eines Endes einer Querstrebe montiert ist. Hierdurch ist ein Verdrehen des Gurtgestells im Belastungsfall verhinderbar. Vorteilhafterweise ist ein Rückhalteorgan gegenüberliegend zu einer an das Gurtgestell angeordneten Komponente der Sicherheitsgurtanordnung am Gurtgestell, insbesondere an der Querstrebe, vorhanden.

In einer vorteilhaften Variante des Gurtgestells umfasst das Rückhalteorgan eine Länge, sodass es an einem rückseitigen Endbereich des Fahrzeugs an einem Haltepunkt der Fahrzeugstruktur, insbesondere an einem Haltepunkt eines Fahrzeugrahmens anordenbar ist, wobei der Haltepunkt bezogen auf die Fahrtrichtung F hinter einer hintersten Hinterachse des Fahrzeugs vorhanden ist.

Das Rückhalteorgan ist vorteilhafterweise im angeordneten Zustand am Fahrzeug derart zwischen Gurtgestell und Fahrzeugrahmen vorhanden, dass es einen Fahrzeugboden durchdringt. Beispielsweise ist hierfür am Fahrzeugboden des Fahrzeugs eine Öffnung, z.B. ein Schlitz vorgesehen.

Vorteilhafterweise erstreckt sich das Rückhalteorgan im angeordneten Zustand am Fahrzeug, insbesondere über einen Großteil seiner Länge parallel zum Fahrzeugboden des Fahrzeugs. Beispielsweise erstreckt sich das Rückhalteorgan über eine Länge zwischen 2 m und 8 m entlang des Fahrzeugbodens, insbesondere entlang des Fahrzeugrahmens, z.B. zwischen 3 m und 7 m, zwischen 3 m und 6 m oder zwischen 3 m und 5 m. Vorteilhafterweise erstreckt sich das Rückhalteorgan zwischen 70 % und 98 % seiner Gesamtlänge entlang des Fahrzeugbodens, insbesondere entlang des Fahrzeugrahmens. Beispielsweise zwischen 70 % und 95 % seiner Gesamtlänge, z.B. zwischen 75 % und 95% seiner Gesamtlänge oder zwischen 80 % und 95 % seiner Gesamtlänge. Insbesondere erstreckt sich das Rückhalteorgan über 90 % seiner Gesamtlänge entlang des Fahrzeugbodens und/oder des Fahrzeugrahmens.

Auch erweist es sich von Vorteil, dass der Montagepunkt des Gurtgestells in vertikaler Erstreckung des Gurtgestells, senkrecht zur Fahrtrichtung F gesehen, an einem unteren Drittel des Gurtgestells vorhanden ist.

Insbesondere in einer Variante des Gurtgestells, in welcher das Rückhalteorgan am Fahrzeugrahmen im Bereich des Fahrzeugbodens an einem Halteorgan im angeordneten Zustand am Fahrzeug befestigt ist, ist ein Montagepunkt des Gurtgestells an einem unteren Bereich des Gurtgestells vorhanden. Der Montagepunkt ist erfindungsgemäss ausgehend von einer Aufstellfläche des Gurtgestells zum Aufstellen auf dem Fahrzeugboden in einer vertikalen Erstreckung des Gurtgestells nach oben gesehen beispielsweise in einem Bereich zwischen 0 mm und 650 mm am Gurtgestell vorhanden, z.B. in einem Bereich zwischen 100 mmm und 600 mm, z.B. zwischen 250 mm und 400 mm oder in einem Bereich zwischen 250 mm und 350 mm. Insbesondere ist ein Montagepunkt am Gurtgestell ausgehend von der Aufstellfläche in vertikaler Richtung nach oben gesehen in einer Höhe von 100 mm, 250 mm, 300 mm, 350 mm, 400 mm, 450 mm, 500 mm, 550 mm, 600 mm und/oder 650 mm am Gurtgestell ausgebildet. Vorteilhafterweise befindet sich ein Montagepunkt in vertikaler Erstreckung des Gurtgestells gesehen auf einer Höhe einer Komponente des Personen-Rückhaltesystems, welche am Gurtgestell angeordnet ist. Die Komponenten ist z.B. als Gurtumlenkanordnung zur Richtungsänderung des daran vorbeigeführten Gurts, Fixierung eines Gurtendes oder als Gurtschloss, an dem das Einsteckteil lösbar einrastbar ist, mit welchem der Gurt als Schlaufe ausziehbar ist, vorhanden. Beispielsweise befindet sich ein Montagepunkt in vertikaler Erstreckung des Gurtgestells gesehen auf Höhe einer Querstrebe, insbesondere der ersten Querstrebe des Gurtgestells von unten gesehen, z.B. ausgehend von der Aufstellfläche des Gurtgestells.

Erfindungsgemäss ist das Rückhalteorgan derart vorhanden, dass eine Verformung eines an der Fahrzeugstruktur eines Fahrzeugs angeordneten Gurtgestells im Belastungsfall vorgebbar ist.

Vorteilhafterweise wird das Rückhalteorgan im Crashfall derart verformt, z.B. gestreckt, sodass eine Verformung des Gurtgestells, insbesondere in Fahrtrichtung des Fahrzeugs, vorgebbar, insbesondere aufhaltbar bzw. stoppbar ist, beispielsweise dann, wenn das Rückhalteorgan seine vollständige Streckung erreicht.

Außerdem wird ein Fahrzeugboden für ein Fahrzeug vorgeschlagen, wobei der Fahrzeugboden einen Aufstellbereich aufweist, um ein Gurtgestell insbesondere nach einer der vorangegangenen Varianten und/oder einen Fahrzeugsitz mit einem Gurtgestell insbesondere nach einer der vorangegangenen Varianten anzuordnen, wobei der Fahrzeugboden Führungsmittel aufweist, um im angeordneten Zustand des Gurtgestells im Fahrzeug ein Rückhalteorgan des Gurtgestells zu führen. Dadurch ist das Rückhalteorgan vergleichsweise einfach und positionsgenau am Fahrzeug, insbesondere am Fahrzeugboden, beispielsweise im Fahrzeugboden, z.B. innerhalb des Fahrzeugbodens anordenbar. Vorteilhafterweise umschließt der Fahrzeugboden, insbesondere die Führungsmittel, im angeordneten Zustand des Gurtgestells das Rückhalteorgan, insbesondere vollständig. Beispielsweise umschließt der Fahrzeugboden, insbesondere die Führungsmittel, im angeordneten Zustand des Gurtgestells das Rückhalteorgan derart, dass das Rückhalteorgan, insbesondere in einem Bereich des Fahrzeugbodens, für einen Nutzer unsichtbar und/oder für weitere Fahrzeugeinbauten nicht störend vorhanden ist.

Als vorteilhaft erweist sich auch, dass die Führungsmittel derart ausgebildet sind, dass in einem Crashfall eine Formveränderung, insbesondere eine Streckung des Rückhalteorgans ermöglicht ist. Beispielsweise sind die Führungsmittel derart vorhanden, dass sich das Rückhalteorgan aus einer Verbindung mit den Führungsmitteln im Crashfall löst. Denkbar ist, dass die Führungsmittel durch das Lösen des Rückhalteorgans im Crashfall zerstört sind. Beispielsweise wird eine Oberseite des Fahrzeugbodens im Crashfall zerstört, z.B. aufgerissen.

Weiter wird vorgeschlagen, dass die Führungsmittel des Gurtgestells derart am Fahrzeugboden ausgebildet sind, dass im angeordneten Zustand des Gurtgestells im Fahrzeug das Rückhalteorgan entlang einer Oberseite und/oder entlang einer Unterseite und/oder zwischen der Oberseite und der Unterseite des Fahrzeugbodens am Fahrzeugboden geführt gehalten ist.

Ein Führungsmittel ist beispielsweise als eine Klammer ausgebildet, welche das Rückhalteorgan im angeordneten Zustand beispielsweise umschließt, umklammert und/oder festhält. Denkbar ist auch, dass ein Führungsmittel als eine Schlaufe vorhanden ist, durch welche das Rückhalteorgan im angeordneten Zustand z.B. durchgefädelt vorhanden ist. Vorstellbar ist auch, dass ein Führungsmittel als insbesondere in einem Querschnitt konkave Vertiefung am Fahrzeugboden vorhanden ist, sodass das Rückhalteorgan bündig oder vertieft zu einer Oberseite und/oder einer Unterseite des Fahrzeugbodens am Fahrzeugboden, insbesondere innerhalb des Fahrzeugbodens, anbringbar ist.

Außerdem erweist es sich von Vorteil, dass die Führungsmittel des Gurtgestells derart am Fahrzeugboden ausgebildet sind, dass im angeordneten Zustand des Gurtgestells im Fahrzeug das Rückhalteorgan in einem Inneren des Fahrzeugbodens geführt vorhanden ist.

Beispielsweise ist ein Führungsmittel als eine Lasche ausgebildet, welche an einer Fahrzeugbodenoberseite und/oder an einer Fahrzeugbodenunterseite beweglich befestigt vorhanden ist, z.B. federnd, sodass das Rückhalteorgan im angeordneten Zustand am Fahrzeug beispielsweise in eine Vertiefung der Fahrzeugbodenoberseite und/oder der Fahrzeugbodenunterseite einlegt vorhanden ist, wobei die Lasche im angeordneten Zustand des Rückhalteorgans die Vertiefung überspannt, wodurch das Rückhalteorgan zwischen einer Oberfläche der Vertiefung und der Lasche gehalten ist.

In einer vorteilhaften Ausgestaltung des Fahrzeugbodens weist der Fahrzeugboden Aufnahmemittel auf, sodass im angeordneten Zustand des Gurtgestells im Fahrzeug das Rückhalteorgan im Inneren des Fahrzeugbodens verlaufend vorhanden ist.

Ein Aufnahmemittel ist beispielsweise als ein Kanal, z.B. in Form einer Röhre, vorhanden, welcher sich in einem Inneren des Fahrzeugbodens erstreckt, sodass im angeordneten Zustand des Rückhalteorgans am Fahrzeug das Rückhalteorgan in einem Inneren des Kanals und damit im Inneren des Fahrzeugbodens angeordnet und für einen Nutzer nicht sichtbar vorhanden ist.

Denkbar ist beispielsweise, dass ein Aufnahmemittel derart im Inneren des Fahrzeugbodens vorhanden ist, sodass das Rückhalteorgan entlang seiner Längsachse in das Aufnahmemittel einklipsbar und/oder eindrückbar ist. Beispielsweise umfasst der Kanal entlang seiner Längserstreckung einen Schlitz durch welchen das Rückhalteorgan in das Innere des Kanals einführbar ist. Der Schlitz ist beispielweise bündig zu einer Oberfläche des Fahrzeugbodens vorhanden.

Vorstellbar ist auch, dass das Rückhalteorgan in angeordneten Zustand des Gurtgestells am Fahrzeug in den Fahrzeugboden eingeschäumt ist. Beispielsweise umschließt der Fahrzeugboden, insbesondere die Führungsmittel des Fahrzeugbodens, das Rückhalteorgan im angeordneten Zustand formschlüssig.

Ebenfalls wird eine Fahrzeugvariante vorgeschlagen, bei welcher der Haltepunkt bezogen auf die Fahrtrichtung F hinter einer hintersten Hinterachse des Fahrzeugs, insbesondere an der Fahrzeugstruktur, z.B. am Fahrzeugrahmen, vorhanden ist.

Beispielsweise ist der Haltepunkt an einem vertikalen Endbereich des Fahrzeugrahmens, insbesondere des Fahrgestells, ausgebildet. Denkbar ist auch, dass der Haltepunkt seitlich am Fahrzeugrahmen, beispielsweise unterhalb des Fahrzeugbodens, angeordnet ist. Beispielsweise ist der Haltepunkt um eine Drehachse drehbar gelagert am Fahrzeugrahmen vorhanden. Vorteilhafterweise ist die Drehachse derart ausgebildet, dass der Haltepunkt sich ausschließlich bei einer Belastung, insbesondere bei einer Zugbelastung, durch ein angeordnetes Rückhalteorgan im Crashfall um die Drehachse drehen kann.

### Beschreibung eines Ausführungsbeispiels

Weitere Merkmale und Vorteile der Erfindung sind anhand eines schematisiert dargestellten Ausführungsbeispiels der Erfindung näher erläutert.

Im Einzelnen zeigen:
- Figur 1: Eine perspektivische Ansicht von seitlich hinten auf ein erfindungsgemäßes Gurtgestell, welches an einem Fahrzeug angeordnet ist,
- Figur 2: eine perspektivische Ansicht von seitlich hinten auf das Gurtgestell aus Figur 1 im Belastungsfall,
- Figur 3: eine seitliche Teilansicht auf eine Grundstruktur eines Fahrzeugs mit einer weiteren Variante eines Gurtgestells, welches an der Grundstruktur angeordnet ist,
- Figur 4: eine seitliche Teilansicht auf das Fahrzeug nach Figur 3 mit einer weiteren Variante eines Gurtgestells im Grundzustand und in einem Belastungsfall,
- Figur 5: eine seitliche Teilansicht auf das Fahrzeug nach Figur 3 mit einer weiteren Ausführung eines Gurtgestells im Grundzustand und
- Figur 6: eine seitliche Teilansicht auf das Fahrzeug nach Figur 3 mit einer weiteren Ausführung eines Gurtgestells im Grundzustand und in einem Belastungsfall.

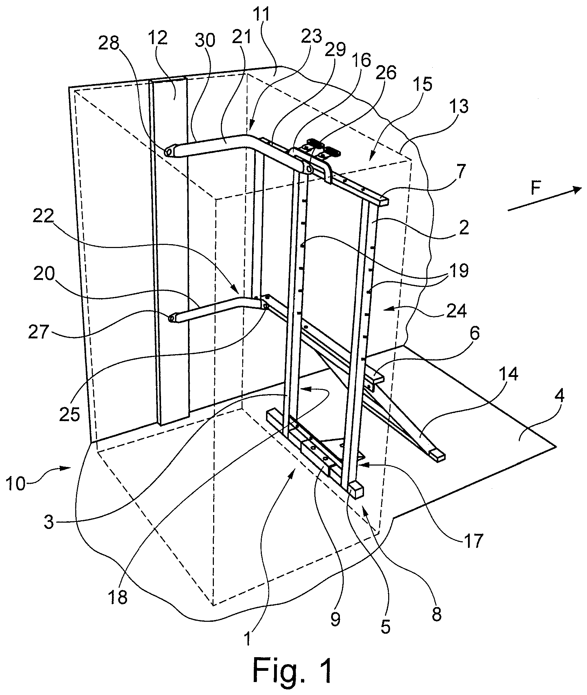

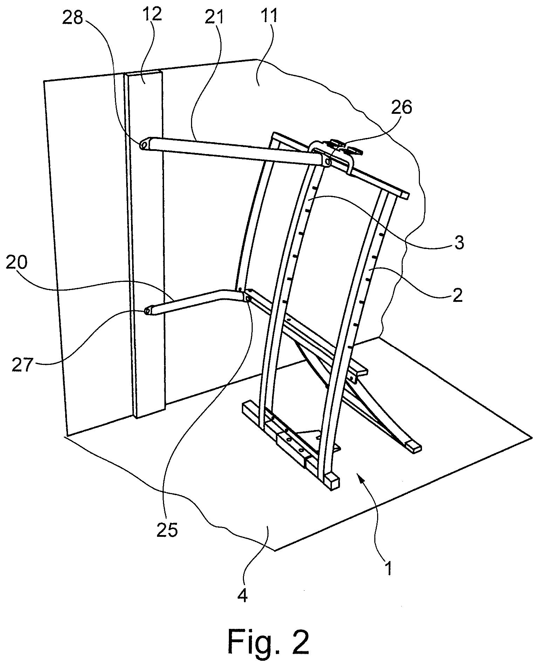

In den Figuren 1 und 2 sind Teile eine Fahrzeugs 10, an welchem ein erfindungsgemäßes Gurtgestell 1 anordenbar ist, schematisch dargestellt. Das Fahrzeug 10 umfasst z.B. einen Fahrzeugboden 4, eine Fahrzeugwand 11, eine vertikal ausgerichtete Stütze 12 einer Fahrzeugstruktur und transparent, in gestrichelten Linien dargestellt z.B. ein Möbel 13, z.B. ein Schrankelement eines Wohnmobils (Figur 1).

Das Gurtgestell 1 umfasst eine erste und eine zweite Vertikalstütze 2, 3, welche senkrecht abstehend und horizontal beabstandet voneinander an einem Fahrzeugboden 4 anordenbar sind. Des Weiteren umfasst das Gurtgestell 1 z.B. eine erste, eine zweite und eine dritte Querstrebe 5, 6, 7, welche die beiden Vertikalstützten 2, 3 miteinander verbinden und welche z.B. horizontal ausgerichtet vorhanden sind. Die erste und die dritte Querstrebe 5, 7 und die beiden Vertikalstützen 2, 3 des Gurtgestells 1 bilden vorteilhafterweise zusammen eine Rahmen. Am Gurtgestell 1 ist weiter eine in eine Fahrtrichtung F schräg nach vorne unten am Gurtgestell 1 abstehende Rahmenstütze 14 vorhanden, welche das Gurtgestell 1 nach vorne unten abstützt. Die Rahmenstütze 14 ist an einer Vorderseite des Gurtgestells 1 angeordnet.

Die erste Querstrebe 5 ist z.B. an einem ersten Ende 8 des Rahmens, dem Fußbereich des Gurtgestells 1 vorhanden und umfasst Anbringmittel 9 zur Montage des Gurtgestells 1 an den Fahrzeugboden 4 bzw. einen unter dem Fahrzeugboden 4 befindlichen Fahrzeugrahmen (nicht dargestellt).

Die zweite Querstrebe 6 ist in vertikaler Richtung gesehen beispielsweise in einem mittleren Bereich des Gurtgestells 1, etwa auf Sitzhöhe eines Fahrzeugsitzes (nicht dargestellt), welcher das Gurtgestell 1 umfasst, vorhanden. An der zweiten Querstrebe 6 stützt sich vorteilhafterweise auch die Rahmenstütze 14 am Gurtgestell 1 ab, bzw. die Rahmenstütze 14 ist vorteilhafterweise an der zweiten Querstrebe 6 am Gurtgestell 1 montiert.

Die dritte Querstrebe 7 ist z.B. in vertikaler Richtung gesehen am der ersten Querstrebe 5 gegenüberliegenden Ende 15 des Gurtgestells 1, einem Kopfbereich des Gurtgestells 1 vorhanden.

An der zweiten und/oder an der dritten Querstrebe 6, 7 sind vorteilhafterweise Komponenten der Sicherheitsgurtanordnung angeordnet. Z.B. ist an der dritten Querstrebe 7 ein Anbindungselement 16 montiert, z.B. angeschweißt, um z.B. einen Gurtaufroller der Sicherheitsgurtanordnung anzuordnen.

Die beiden Vertikalstützen 2, 3 umfassen vorteilhafterweise in einem Bereich 24 zwischen der zweiten und der dritten Querstrebe 6, 7 auf ihren Vorderseiten 17, 18 Ausnehmungen in Form von Schlitzungen 19. Ein Bereich um eine Schlitzung 19 herum ist als Soll-Biegestelle der Vertikalstütze 2, 3 im Belastungsfall vorgesehen. Hierdurch ist eine Verformung der Vertikalstützen 2, 3 und damit eine Energieabsorption einer Energie, welche im Belastungsfall auf das Gurtgestell 1 einwirkt, realisierbar, insbesondere vorgebbar.

Das Gurtgestell 1 umfasst des Weiteren zwei Rückhalteorgane in Form von zwei Rückhaltebändern 20, 21. Die Rückhaltebänder 20, 21 sind als schmale, flache, laschenartige Organe ausgebildet. Ein Rückhalteband 20, 21 umfasst eine Biegung 22, 23. Vorteilhafterweise ist, das Rückhalteband 20, 21 L-förmig vorhanden.

Ein Rückhalteband 20, 21 ist vorteilhafterweise mit einem ersten Ende am Gurtgestell 1 montiert. Hierzu ist am Gurtgestell 1 ein Montagepunkt 25, 26 ausgebildet, an welchem das jeweilige Rückhalteband 20, 21 anschraubbar und/oder anschweißbar und/oder mit anderen Verbindungsmitteln befestigbar ist. Des Weiteren ist das Rückhalteband 20, 21 mit einem dem ersten Ende gegenüberliegenden zweiten Ende an der Fahrzeugstütze 12 befestigbar. An der Fahrzeugstütze 12 ist hierfür vorteilhafterweise ein Haltepunkt 27, 28 vorhanden, an welchem das jeweilige Rückhalteband 20, 21 anschraubbar und/oder anschweißbar und/oder mit anderen Verbindungsmitteln befestigbar ist.

Der Montagepunkt 25, 26 und/oder der Haltepunkt 27, 28 ist vorteilhafterweise in vertikaler Richtung versetzt zum Fahrzeugboden 4 am Gurtgestell 1 bzw. an der Fahrzeugstütze 12 vorhanden. Insbesondere ist der Haltepunkt 27, 28 in Fahrtrichtung F betrachtet hinter dem Gurtgestell 1, bspw. dem Montagepunkt 25, 26 vorhanden. Der Montagepunkt 25, 26 ist vorteilhafterweise an einer Rückseite des Gurtgestells 1, welche der Vorderseite des Gurtgestells 1 gegenüberliegend vorhanden ist ausgebildet.

Durch die vorteilhaft gebogene Ausbildung des Rückhaltebands 20, 21 ist das Rückhalteband 20, 21 derart im Fahrzeug 10 anordenbar, sodass es in seinem Verlauf vom Montagepunkt 25, 26 am Gurtgestell 1 zum Haltepunkt 27, 28 am Fahrzeug 10, vorteilhafterweise in einer insbesondere horizontalen Ebene, zunächst in einem ersten Schenkel 29 einem rückseitigen Verlauf des Gurtgestells 1 bzw. eines Fahrzeugsitzes, welcher das Gurtgestell 1 umfasst, insbesondere anliegend folgt und dann durch die Biegung 21, 22 abgelenkt in einem zweiten Schenkel 30 z.B. einem Verlauf einer Fahrzeugwand 11 insbesondere anliegend bis zum Haltepunkt 27, 28 zu folgen. Hierdurch ist ein freier Bauraum hinter dem Gurtgestell 1, z.B. hinter dem Fahrzeugsitz, im Fahrzeug realisiert.

Vorteilhafterweise ist eine Gesamtlänge des ersten und des zweiten Schenkels 29, 30 größer, als ein direkter Abstand des Montagepunkts 26 bzw. 25 zum Haltepunkt 28 bzw. 27. Im Belastungsfall ist das Gurtgestell 1, insbesondere die Vertikalstützen 2, 3 vorteilhafterweise dazu ausgebildet, sich mit dem Kopfbereich 15 in Fahrtrichtung zu verbiegen, um dabei Energie zu absorbieren. Durch die vorteilhafte Anordnung des Rückhaltebands 20, 21 ist es im Belastungsfall somit möglich, dass das Rückhalteband 20, 21 sich zunächst derart streckt und dabei ebenfalls Energie absorbiert, sodass es sich in direkter Linie vom Montagepunkt 26 bzw. 25 zum Haltepunkt 28 bzw. 27 vergleichsweise gerade erstreckt, um dann, im gestreckten Zustand, das Gurtgestell 1, insbesondere den Kopfbereich 15 des Gurtgestells 1, festzuhalten und somit ein weiteres Verbiegen des Gurtgestells 1 aufzuhalten (Figur 2). Hierdurch ist die gesetzlich vorgegebene Stabilität des Fahrzeugsitzes, welcher das Gurtgestell 1 umfasst, insbesondere vergleichsweise kostengünstig realisierbar.

Das hinter dem Gurtgestell 1 im Fahrzeug 10 ggf. vorhandene Möbel 13 ist vorteilhafterweise derart ausgebildet und/oder am Fahrzeug 10 angeordnet, dass im Belastungsfall eine Streckung des Rückhaltebands 20, 21 realisierbar ist. Bspw. wird das Möbel 13 im Belastungsfall durch die Streckung des Rückhaltebands 20, 21 beschädigt.

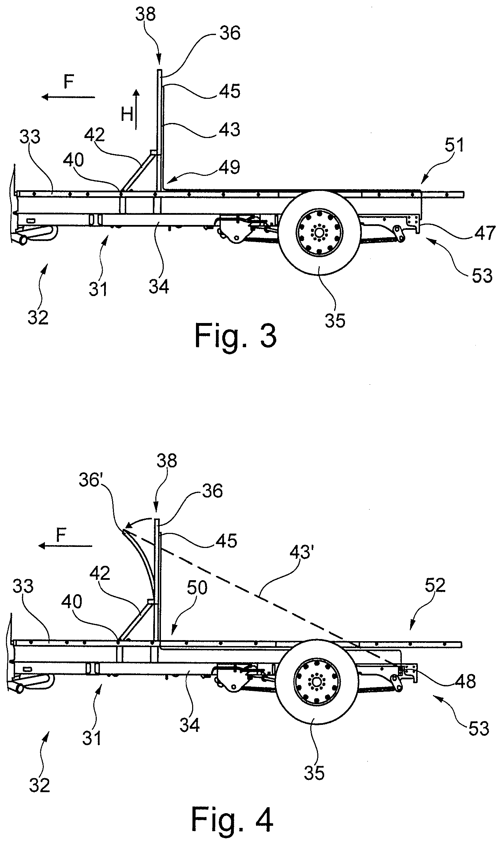

In den Figuren 3 bis 6 ist in seitlicher Ansicht ein Fahrgestell 31 eines Fahrzeugs 32 gezeigt, an welchem ein Fahrzeugboden 33 vorhanden ist. Das Fahrgestell 31 umfasst unter anderem ein Fahrzeugrahmen 34. Am Fahrzeugrahmen 34 sind z.B. Radaufhängungen anordenbar, z.B. für ein Hinterrad 35.

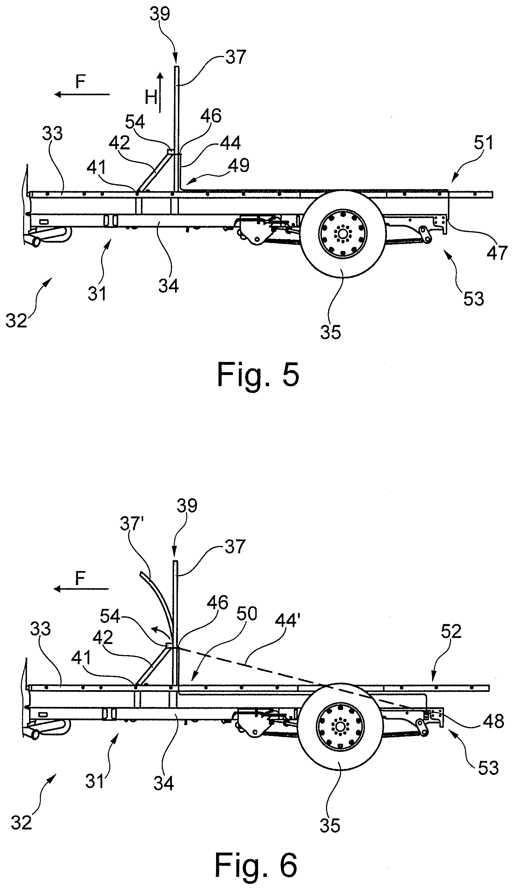

In den Figuren 3 und 4 und in den Figuren 5 und 6 ist jeweils eine weitere Variante eines Gurtgestells 36 bzw. 37 gezeigt, welches auf dem Fahrzeugboden 33 befestigt ist. Im Crashfall wird durch die auftretenden Kräfte zum einen ein oberer Bereich 38, 39 des Gurtgestells 36, 37 in Fahrtrichtung F verbogen. Dies ist insbesondere deutlich in den Figuren 4 und 6 durch ein verbogenes Gurtgestell 36' und 37' dargestellt. Zum anderen wird der hintere Bereich des Gurtgestells 36, 37, insbesondere die Vertikalstützen nach oben weg, in Richtung H, gehoben, z.B. vom Fahrzeugboden abgehoben, und das Gurtgestell um einen Anlenkpunkt 40, 41 des Gurtgestells gedreht, insbesondere um einen Anbringpunkt der Rahmenstütze 42 am Fahrzeugboden 33 und/oder am Fahrzeugrahmen 34. Aufgabe eines erfindungsgemäßen Rückhaltebands, z.B. der Rückhaltebänder 43, 44 des Gurtgestells 36, 37, ist es, insbesondere den beiden oben genannten Bewegungen des Gurtgestells 36, 37 im Crashfall entgegenzuwirken. Idealerweise die genannten Bewegungen zu unterbinden oder aufzuhalten. Insbesondere die, die Bewegung bewirkenden bzw. verursachend Kräfte zu absorbieren, bzw. aufzunehmen und/oder weiterzuleiten bzw. zu übertragen beispielsweise in Richtung Fahrzeugrahmen 34 bzw. auf den Fahrzeugrahmen 34.

Das Rückhalteband 43, 44 ist z.B. ausgehend von einem Montagepunkt 45, 46 in vertikaler Richtung entlang einer Vertikalstütze des Gurtgestells 36, 37 nach unten in Richtung Fahrzeugboden 33 geführt, um anschließend in einer Biegung 49, 50 entgegen der Fahrzeugrichtung F entlang des Fahrzeugbodens 33 sich zu erstrecken. In einer weiteren Biegung 51, 52 erstreckt sich das Rückhalteband 43, 44 nach unten und ist an einem Haltepunkt 47, 48 am Fahrzeugrahmen 34 befestigt.

In den Figuren 3 und 5 bzw. in den Figuren 4 und 6 ist jeweils eine Variante eines Haltepunkts 47, 48 bzw. eine Variante einer Erstreckung des Rückhaltebands 43, 44 dargestellt. In den Figuren 3 und 5 erstreckt sich das Rückhalteband 43, 44 oberhalb des Fahrzeugbodens 33 am Fahrzeugboden 33. In den Figuren 4 und 6 erstreckt sich das Rückhalteband 43, 44 unterhalb des Fahrzeugbodens 33 am Fahrzeugboden 33, insbesondere zwischen Fahrzeugboden 33 und Fahrzeugrahmen 34. Außerdem ist in den Figuren 3 und 5 beispielhaft dargestellt, dass der Haltepunkt 47 am hinteren Ende 53 des Fahrzeugrahmens 34 ausgebildet sein kann. Denkbar ist auch, wie in den Figuren 4 und 6 dargestellt, dass der Haltepunkt 48 seitlich am Fahrzeugrahmen 34, insbesondere im Bereich des hinteren Endes 53 des Fahrzeugrahmens 34, vorgesehen ist.

Weiter ist in den Figuren 3 und 4 dargestellt, dass der Montagepunkt 45 in einem oberen Bereich, insbesondere in einem oberen Drittel des Gurtgestells 36 vorhanden sein kann. In den Figuren 5 und 6 wiederum ist dargestellt, dass der Montagepunkt 46 z.B. im Bereich des unteren Drittels des Gurtgestells 37 vorhanden ist. Vorteilhafterweise ist der Montagepunkt 46 auf Höhe einer Querstrebe 54 des Gurtgestells 36 ausgebildet. Die Querstrebe 54 ist beispielsweise dazu vorgesehen eine Komponente eines Gurtrückhaltesystems anzuordnen. Außerdem greift z.B. im Bereich der Querstrebe 54, beispielsweise an der Querstrebe 54, die Rahmenstütze 42 an. Die Höhe der Anbindung des Rückhaltebands 43, 44 am Gurtgestell 36, 37 bzw. eine Ausbildungshöhe des Montagepunkts 45, 46 am Gurtgestell 36, 37 ist unter anderem beispielsweise abhängig von einer Erstreckungslänge des Rückhaltebands 43, 44 entlang des Fahrzeugbodens 33.

In den Figuren 4 und 6 ist das Rückhalteband 43', 44' in einem Funktionszustand (gestrichelt) im Crashfall idealisiert dargestellt. Im Funktionszustand streckt sich das Rückhalteband 43, 44 zwischen dem Montagepunkt 45, 46 und dem Haltepunkt 47, 48. Durch die Streckung des Rückhaltebands 43, 44 werden eventuell im Fahrzeug angeordnete Gegenstände, wie z.B. Möbel und/oder auch der Fahrzeugboden 33, im Fall, dass das Rückhalteband 43, 44 unterhalb des Fahrzeugbodens 33 vorhanden ist, beschädigt. Außerdem wird durch die Streckung des Rückhaltebands 43, 44 auf das Gurtgestell wirkende Kräfte absorbiert und vorteilhaft an die Fahrzeugstruktur, z.B. den Fahrzeugrahmen 34 abgeleitet.

### Bezugszeichenliste:

- 1: Gurtgestell
- 2, 3: Vertikalstütze
- 4: Fahrzeugboden
- 5 - 7: Querstrebe
- 8: Ende
- 9: Anbringmittel
- 10: Fahrzeug
- 11: Fahrzeugwand
- 12: Stütze
- 13: Möbel
- 14: Rahmenstütze
- 15: Ende
- 16: Anbindungselement
- 17, 18: Vorderseite
- 19: Schlitzung
- 20, 21: Rückhalteband
- 22, 23: Biegung
- 24: Bereich
- 25, 26: Montagpunkt
- 27, 28: Haltepunkt
- 29, 30: Schenkel
- 31: Fahrgestell
- 32: Fahrzeug
- 33: Fahrzeugboden
- 34: Fahrzeugrahmen
- 35: Hinterrad
- 36, 37: Gurtgestell
- 36', 37': Gurtgestell
- 38, 39: Ende
- 40, 41: Anlenkpunkt
- 42: Rahmenstütze
- 43, 44: Rückhalteband
- 43', 44': Rückhalteband
- 45, 46: Montagepunkt
- 47, 48: Haltepunkt
- 49 - 52: Biegung
- 53: Ende
- 54: Querstreb

## Patentansprüche

1. Gurtgestell (1) für einen Fahrzeugsitz oder eine Fahrzeugsitzbank, wobei am Gurtgestell (1) Anbringmittel (9) zur Anbringung an eine Fahrzeugstruktur eines Fahrzeugs (10) im Bereich eines Fahrzeugbodens (4) vorhanden sind, wobei das Gurtgestell (1) ein Rückhalteorgan (20, 21) umfasst, wobei das Rückhalteorgan (20, 21) am Gurtgestell (1) in einem vertikalen Abstand zu den Anbringmittel (9) zur Anbringung des Gurtgestells (1) an die Fahrzeugstruktur des Fahrzeugs (19) angeordnet ist, und wobei das Rückhalteorgan (20, 21) dazu ausgebildet ist, an einem Haltepunkt (27, 28) der Fahrzeugstruktur (12) des Fahrzeugs (10) angeordnet zu werden, wobei im angeordneten Zustand des Gurtgestells (1) am Fahrzeug (10) der Haltepunkt (27, 28) in einem Bereich hinter einer Rückseite des Gurtgestells (1) bezogen auf eine Fahrtrichtung F vorhanden ist, **dadurch gekennzeichnet, dass** das Rückhalteorgan (20, 21) an einem Montagepunkt (45, 46) des Gurtgestells (1) montiert ist, wobei der Montagepunkt (45, 46) ausgehend von einer Aufstellfläche des Gurtgestells (1) zum Aufstellen auf dem Fahrzeugboden (4) in einer vertikalen Erstreckung des Gurtgestells (1) nach oben gesehen in einem Bereich von 100 mm bis 650 mm am Gurtgestell (1) vorhanden ist, wobei das Rückhalteorgan (20, 21) derart vorhanden ist, dass eine Verformung des an der Fahrzeugstruktur (4, 12) eines Fahrzeugs (10) angeordneten Gurtgestells (1) im Belastungsfall vorgebbar ist, wobei das Rückhalteorgan (20, 21) entlang seines Verlaufs vom Gurtgestell (1) zum Haltepunkt (27, 28) der Fahrzeugstruktur (12) eine Biegung (22, 23) aufweist, wobei das Rückhalteorgan (20, 21) in einem Belastungsfall derart plastisch verformbar ist, dass die Biegung (22, 23) verändert ist.

2. Gurtgestell (1) nach dem Anspruch 1, **dadurch gekennzeichnet, dass** das Rückhalteorgan (20, 21) als flaches Element vorhanden ist.

3. Gurtgestell (1) nach einem der vorangegangenen Ansprüche,
**dadurch gekennzeichnet, dass** das Rückhalteorgan (20, 21) entlang seines Verlaufs vom Gurtgestell (1) zum Haltepunkt (27, 28) der Fahrzeugstruktur (12) verformbar vorhanden ist.

4. Gurtgestell (1) nach einem der vorangegangenen Ansprüche,
**dadurch gekennzeichnet, dass** das Rückhalteorgan (20, 21) mehrere Biegungen (22, 23) aufweist.

5. Gurtgestell (1) nach einem der vorangegangenen Ansprüche,
**dadurch gekennzeichnet, dass** zwei oder mehr Rückhalteorgane (20, 21) vorhanden sind.

6. Gurtgestell (1) nach einem der vorangegangenen Ansprüche,
**dadurch gekennzeichnet, dass** der Montagepunkt (25, 26) des Gurtgestells (1) in horizontaler Erstreckung des Gurtgestells (1) und senkrecht zu der Fahrtrichtung F gesehen, in einem mittleren und/oder einem äußeren Bereich des Gurtgestells (1) vorhanden ist.

7. Gurtgestell (1, 36, 37) nach einem der vorangegangenen Ansprüche, **dadurch gekennzeichnet, dass** das Rückhalteorgan (43, 44) eine Länge umfasst, sodass es an einem rückseitigen Endbereich (53) des Fahrzeugs (32) an einem Haltepunkt (47, 48) der Fahrzeugstruktur (31), insbesondere an einem Haltepunkt (47, 48) eines Fahrzeugrahmens (34) anordenbar ist, wobei der Haltepunkt (47, 48) bezogen auf die Fahrtrichtung F hinter einer hintersten Hinterachse des Fahrzeugs (32) vorhanden ist.

8. Gurtgestell (1, 36, 37) nach einem der vorangegangenen Ansprüche, **dadurch gekennzeichnet, dass** der Montagepunkt (46) des Gurtgestells (37) in vertikaler Erstreckung des Gurtgestells (37), senkrecht zur Fahrtrichtung F gesehen, an einem unteren Drittel des Gurtgestells (37) vorhanden ist.

9. Fahrzeugsitz mit einem Gurtgestell (1) nach einem der vorangegangen Ansprüche.

10. Fahrzeug (10) mit einem Gurtgestell (1) nach einem der vorangegangenen Ansprüche 1 bis 8 und/oder einem Fahrzeugsitz nach dem vorangegangenen Anspruch 9.

11. Fahrzeug (32) nach Anspruch 10, **dadurch gekennzeichnet, dass** der Haltepunkt (47, 48) bezogen auf die Fahrtrichtung F hinter einer hintersten Hinterachse des Fahrzeugs (32), insbesondere an der Fahrzeugstruktur (31), z.B. am Fahrzeugrahmen (34), vorhanden ist.

## Claims

1. Belt frame (1) for a vehicle seat or a vehicle seat bench, wherein attachment means (9) for attaching to a structure of a vehicle (10) in the region of a vehicle floor (4) are present on the belt frame (1), wherein the belt frame (1) comprises a restraint member (20, 21), wherein the restraint member (20, 21) is arranged on the belt frame (1) at a vertical distance from the attachment means (9) for attaching the belt frame (1) to the structure of the vehicle (19), and wherein the restraint member (20, 21) is designed to be arranged at a holding point (27, 28) of the structure (12) of the vehicle (10), wherein, in the state of the belt frame (1) arranged on the vehicle (10), the holding point (27, 28) is present in a region behind a rear side of the belt frame (1) with respect to a direction of travel F, **characterized in that** the restraint member (20, 21) is mounted at a mounting point (45, 46) of the belt frame (1), wherein the mounting point (45, 46) is present on the belt frame (1) in a range of 100 mm to 650 mm starting from an erecting surface of the belt frame (1) for erecting on the vehicle floor (4) as seen in a vertical extent of the belt frame (1) upwards, wherein the restraint member (20, 21) is present in such a manner that a deformation of the belt frame (1), which is arranged on the structure (4, 12) of a vehicle (10), can be predetermined in the event of loading, wherein the restraint member (20, 21) has a bend (22, 23) along its profile from the belt frame (1) to the holding point (27, 28) of the vehicle structure (12), wherein the restraint member (20, 21) can be plastically deformed in the event of loading in such a manner that the bend (22, 23) is changed.

2. Belt frame (1) according to Claim 1, **characterized in that** the restraint member (20, 21) is present as a flat element.

3. Belt frame (1) according to one of the preceding claims, **characterized in that** the restraint member (20, 21) is present so as to be deformable along its profile from the belt frame (1) to the holding point (27, 28) of the vehicle structure (12).

4. Belt frame (1) according to one of the preceding claims, **characterized in that** the restraint member (20, 21) has a plurality of bends (22, 23).

5. Belt frame (1) according to one of the preceding claims, **characterized in that** there are two or more restraint members (20, 21).

6. Belt frame (1) according to one of the preceding claims, **characterized in that** the mounting point (25, 26) of the belt frame (1) is present in a central and/or an outer region of the belt frame (1), as seen in a horizontal extent of the belt frame (1) and perpendicularly to the direction of travel F.

7. Belt frame (1, 36, 37) according to one of the preceding claims, **characterized in that** the restraint member (43, 44) comprises a length such that it can be arranged on a rear-side end region (53) of the vehicle (32) at a holding point (47, 48) of the vehicle structure (31), in particular at a holding point (47, 48) of a vehicle frame (34), wherein the holding point (47, 48) is present behind a rearmost rear axle of the vehicle (32) with respect to the direction of travel F.

8. Belt frame (1, 36, 37) according to one of the preceding claims, **characterized in that** the mounting point (46) of the belt frame (37) is present on the lower third of the belt frame (37) in the vertical extent of the belt frame (37), as seen perpendicularly to the direction of travel F.

9. Vehicle seat with a belt frame (1) according to one of the preceding claims.

10. Vehicle (10) with a belt frame (1) according to one of the preceding Claims 1 to 8 and/or with a vehicle seat according to the preceding Claim 9.

11. Vehicle (32) according to Claim 10, **characterized in that** the holding point (47, 48) is present behind a rearmost rear axle of the vehicle (32) with respect to the direction of travel F, in particular on the vehicle structure (31), for example on the vehicle frame (34).

## Revendications

1. Châssis de ceinture (1) pour un siège de véhicule ou une banquette de véhicule, des moyens de mise en place (9) pour la mise en place sur une structure de véhicule d'un véhicule (10) dans la zone d'un plancher de véhicule (4) étant présents sur le châssis de ceinture (1), le châssis de ceinture (1) comprenant un organe de retenue (20, 21), l'organe de retenue (20, 21) étant agencé sur le châssis de ceinture (1) à une distance verticale des moyens de mise en place (9) pour la mise en place du châssis de ceinture (1) sur la structure de véhicule du véhicule (19), et l'organe de retenue (20, 21) étant configuré pour être agencé sur un point de maintien (27, 28) de la structure de véhicule (12) du véhicule (10) ; dans l'état agencé du châssis de ceinture (1) sur le véhicule (10), le point de maintien (27, 28) étant présent dans une zone derrière un côté arrière du châssis de ceinture (1) par rapport à une direction de conduite F, **caractérisé en ce que** l'organe de retenue (20, 21) est monté sur un point de montage (45, 46) du châssis de ceinture (1), le point de montage (45, 46) étant présent sur le châssis de ceinture (1) dans une zone de 100 mm à 650 mm à partir d'une surface d'installation du châssis de ceinture (1) pour l'installation sur le plancher de véhicule (4), tel que vu dans une extension verticale du châssis de ceinture (1) vers le haut, l'organe de retenue (20, 21) étant présent de telle sorte qu'une déformation du châssis de ceinture (1) agencé sur la structure de véhicule (4, 12) d'un véhicule (10) en cas de sollicitation soit prédéterminable, l'organe de retenue (20, 21) présentant, le long de son trajet depuis le châssis de ceinture (1) jusqu'au point de retenue (27, 28) de la structure de véhicule (12), une courbure (22, 23), l'organe de retenue (20, 21) étant, en cas de sollicitation, plastiquement déformable de telle sorte que la courbure (22, 23) est modifiée.

2. Châssis de ceinture (1) selon la revendication 1, **caractérisé en ce que** l'organe de retenue (20, 21) est présent sous la forme d'un élément plat.

3. Châssis de ceinture (1) selon l'une quelconque des revendications précédentes, **caractérisé en ce que** l'organe de retenue (20, 21) est présent sous forme déformable le long de son extension depuis le châssis de ceinture (1) jusqu'au point de maintien (27, 28) de la structure de véhicule (12).

4. Châssis de ceinture (1) selon l'une quelconque des revendications précédentes, **caractérisé en ce que** l'organe de retenue (20, 21) comprend plusieurs courbures (22, 23).

5. Châssis de ceinture (1) selon l'une quelconque des revendications précédentes, **caractérisé en ce que** deux ou davantage d'organes de retenue (20, 21) sont présents.

6. Châssis de ceinture (1) selon l'une quelconque des revendications précédentes, **caractérisé en ce que** le point de montage (25, 26) du châssis de ceinture (1) est présent, tel que vu dans l'extension horizontale du châssis de ceinture (1) et perpendiculairement à la direction de conduite F, dans une zone centrale et/ou extérieure du châssis de ceinture (1).

7. Châssis de ceinture (1, 36, 37) selon l'une quelconque des revendications précédentes, **caractérisé en ce que** l'organe de retenue (43, 44) comprend une longueur, de telle sorte qu'il puisse être agencé sur une zone d'extrémité arrière (53) du véhicule (32) sur un point de maintien (47, 48) de la structure de véhicule (31), notamment sur un point de maintien (47, 48) d'un cadre de véhicule (34), le point de maintien (47, 48) étant présent, par rapport à la direction de conduite F, derrière un essieu arrière le plus arrière du véhicule (32).

8. Châssis de ceinture (1, 36, 37) selon l'une quelconque des revendications précédentes, **caractérisé en ce que** le point de montage (46) du châssis de ceinture (37) est présent, tel que vu dans l'extension verticale du châssis de ceinture (37), perpendiculairement à la direction de conduite F, au niveau d'un tiers inférieur du châssis de ceinture (37).

9. Siège de véhicule muni d'un châssis de ceinture (1) selon l'une quelconque des revendications précédentes.

10. Véhicule (10) muni d'un châssis de ceinture (1) selon l'une quelconque des revendications 1 à 8 précédentes et/ou d'un siège de véhicule selon la revendication 9 précédente.

11. Véhicule (32) selon la revendication 1, **caractérisé en ce que** le point de maintien (47, 48) est présent, par rapport à la direction de conduite F, derrière un essieu arrière le plus arrière du véhicule (32), notamment sur la structure de véhicule (31), p. ex. sur le cadre de véhicule (34).
